# FASCICULE DE BREVET EUROPEEN

(11) **EP 1 479 975 B1**
(45) Date de publication et mention de la délivrance du brevet: **02.11.2016**
(21) Numéro de dépôt: 04291199.0
(22) Date de dépôt: 11.05.2004
(51) Int. Cl.: F23R 3/50, F23R 3/60, F23R 3/00

(54) **Chambre de combustion ayant une liason souple entre un fond de chambre et une paroi de chambre**
Brennkammer mit einer flexiblen Verbindung zwischen einem Kammerboden und einer Kammerwand
Combustion chamber having a flexible joint between a chamber base and a chamber wall

(30) Priorité: 20.05.2003 FR 0306016
(43) Date de publication de la demande: 24.11.2004
(73) Titulaire: SNECMA, 75015 Paris (FR)
(72) Inventeur: De Sousa, Mario, 77240 Cesson-la-Foret (FR); Hernandez, Didier, 77720 Quiers (FR); Guerville, Philippe, 77000 Vaux-le-Penil (FR)
(74) Mandataire: Intès, Didier Gérard André

(56) Documents cités:
- FR-A- 2 825 779
- FR-A- 2 825 781
- FR-A- 2 825 784

## Description

L'invention concerne une chambre de combustion annulaire d'une turbomachine d'axe X comportant une paroi radialement intérieure, une paroi radialement extérieure et un fond de chambre disposé entre lesdites parois dans la région amont de la chambre, ledit fond de chambre étant fixé sur lesdites parois au moyen d'une pluralité de brides d'accrochage radialement intérieures et d'une pluralité de brides d'accrochage radialement extérieures, disposées en amont dudit fond de chambre, par boulonnage d'une zone desdites brides sur lesdites parois.

Actuellement, le fond de chambre et les parois intérieure et extérieure sont réalisés dans des matériaux similaires, ayant des coefficients de dilatation voisins, et la liaison entre le fond de chambre et ces parois est réalisée par boulonnage rigide des brides qui peuvent être courtes dans la direction axiale.

Afin d'augmenter les rendements des turbomachine, notamment d'aviation, on fait en sorte que la température des gaz dans les zones de combustion vives soit de plus en plus élevée, et on protège les parois par des films d'air de refroidissement.

Pour éviter que le fond de chambre, habituellement réalisé en un matériau similaire à celui des parois, ne subisse des déformations irréversibles par suite d'un excès de température, ce fond de chambre peut être réalisé en un matériau différent de celui des parois radialement interne et externe et qui peut supporter des températures plus élevées. Dans ce cas le coefficient de dilatation du matériau constitutif du fond de chambre est différent de celui des parois, et la liaison du fond de chambre auxdites parois par boulonnage rigide, c'est à dire avec des brides courtes, est rédhibitoire du point de vue de la tenue mécanique des pièces.

Les contraintes auxquelles sont soumises les brides d'accrochage augmentent lorsque les écarts de dilatation radiale des points d'ancrage des brides sur le fond de chambre d'une part, et des zones de boulonnage, d'autre part, augmentent et sont d'autant plus élevées que la distance, à travers la bride, entre le point d'ancrage et la zone de boulonnage, est faible.

Pour diminuer ces contraintes pour des écarts de dilatation radiale prédéterminés, on peut augmenter la distance, à travers la bride, entre le point d'ancrage et la zone de boulonnage en utilisant des brides souples ayant la forme d'un arceau et qui contournent radialement les écrous des boutons (une telle réalisation est décrite par exemple dans le document FR-A-2 825 779). Mais ces brides souples occupent beaucoup de place dans l'enceinte située en amont du fond de chambre, l'amont étant défini par rapport au sens de circulation normale, de l'amont vers l'aval, ou de l'entrée vers la sortie, des gaz circulant dans la chambre de combustion.

Or la place disponible dans cette enceinte est limitée, du fait de la présence des systèmes d'injection.

Il existe donc un besoin d'une nouvelle bride d'accrochage qui fournisse la souplesse nécessaire pour permettre les écarts de dilatation radiale des différentes pièces et qui ne soit pas encombrante dans la direction radiale.

C'est le but de l'invention.

L'invention concerne donc une chambre de combustion telle que mentionnée en introduction.

Cette chambre de combustion est caractérisée par le fait que l'une au moins de ladite pluralité des brides d'accrochage comporte une pluralité de paires de pattes qui s'étendent vers l'amont au-delà des zones de boulonnage, les deux pattes d'une paire étant disposées circonférentiellement de part et d'autre d'une zone de boulonnage et étant raccordées à leurs extrémités amont à l'extrémité amont d'une plaque de fixation, qui s'étend entre lesdites deux pattes et qui présente une zone de boulonnage destinée à être fixée à la paroi adjacente.

Cette disposition de la bride permet d'augmenter la distance, à travers la bride, entre le pont d'ancrage des pattes et la zone de boulonnage du double de la distance séparant la zone de boulonnage de l'extrémité amont de la plaque de fixation, sans augmenter de manière notable, l'encombrement radial de la bride proposée par rapport à une bride d'accrochage traditionnelle rigide et de faible étendue axiale.

Les dispositions suivantes sont en outre de préférence adoptées :
Les extrémités amont des pattes d'une paire de pattes et l'extrémité amont de la plaque de fixation associée comportent une surépaisseur destinée à supporter les contraintes de flexion radiale.

Chaque patte est séparée de la plaque de fixation associée par une fente débouchant dans un trou situé au voisinage de la surépaisseur. Ces trous permettent de réduire les concentrations de contrainte de forme, en extrémité des fentes, près des surépaisseurs.

Pour s'intégrer à l'environnement, les pattes présentent un double cambrage entre l'anneau et la zone de boulonnage. Ces cambrages augmentent aussi la distance à travers la bride entre le point d'ancrage des pattes et la zone de boulonnage, et améliorent la souplesse des pattes.

Les pattes sont susceptibles d'être en appui contre la paroi adjacente au moins au voisinage du double cambrage afin de limiter le débattement du fond de chambre par rapport à ladite paroi en cas de résonance vibratoire.

D'autres caractéristiques et avantages de l'invention ressortiront à la lecture de la description suivante fait à titre d'exemple et en référence aux dessins annexés dans lesquels:
la figure 1 est une demi-vue en coupe d'une chambre de combustion d'une turbomachine d'axe X, prise selon un plan radial contenant l'axe X, cette chambre de combustion comportant des brides d'accrochage du fond de chambre conformes à l'invention ;
la figure 2 est une vue partielle en perspective des brides d'accrochage selon l'invention ;
la figure 3 est une coupe, selon la ligne III-III de la figure 4, d'un système d'accrochage d'une paire de pattes sur la paroi radialement intérieure de la chambre de combustion ;
la figure 4 est une vue de dessus du système d'accrochage de la figure 3, prise selon la flèche V, et ;
les figures 5 et 6 semblables à la figure 3 montrent les déformations subies par les pattes et la plaque de fixation respectivement en cas de rétraction radiale ou extension radiale du point d'accrochage des pattes sur le fond de chambre, par rapport à la paroi radialement intérieure de la chambre de combustion.

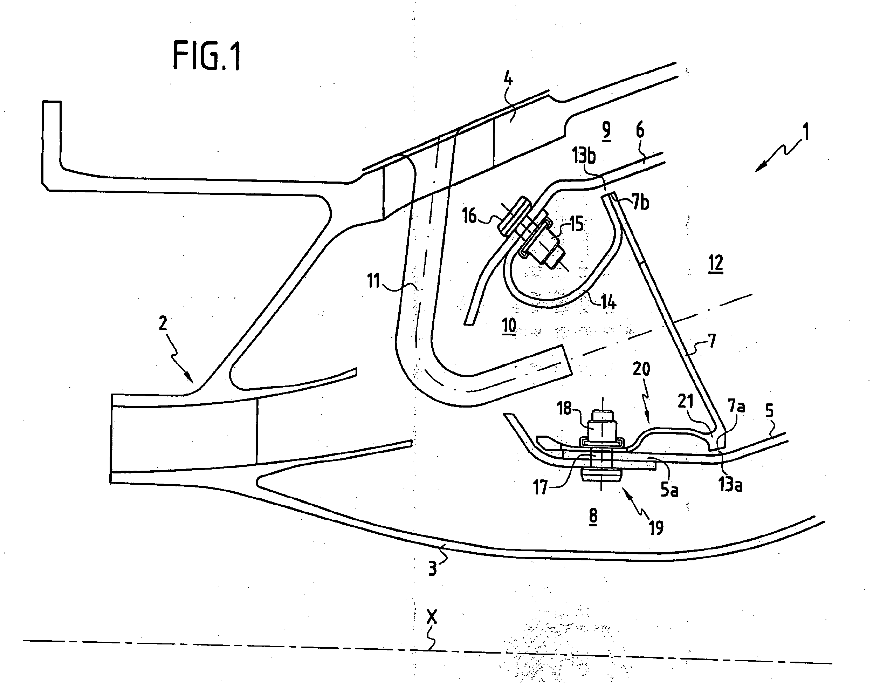

La figure 1 montre une chambre de combustion 1 annulaire d'une turbomachine d'axe X, disposée en aval d'un diffuseur 2, entre une paroi intérieure 3 de carter et une paroi extérieure 4 de carter. Dans le présent mémoire, l'aval et l'amont sont définis par rapport au sens de l'écoulement normal des gaz à travers la chambre de combustion 1.

La chambre de combustion 1 est délimitée par une paroi radialement intérieure 5, une paroi radialement extérieure 6 et un fond de chambre 7 qui s'étend entre la paroi radialement intérieure 5 et la paroi radialement extérieure 6, dans la région amont de la chambre 1.

La paroi radialement intérieure 5 est située radialement à l'extérieur de la paroi interne 3 de carter et délimite avec cette dernière un canal annulaire intérieur 8 destiné à recevoir un débit d'air servant à la dilution dans la zone aval de la chambre 1 et au refroidissement des turbines.

La paroi radialement extérieure 6 est située radialement à l'intérieur de la paroi extérieure 4 de carter et délimite également avec cette dernière un canal annulaire extérieur 9 destiné à recevoir un débit d'air pour la dilution et pour le refroidissement du stator des turbines non montrées sur les dessins.

Le fond de chambre 7 partage le volume annulaire délimité par la paroi radialement intérieure 3 et la paroi radialement extérieure 4 en une zone amont 10 dans laquelle logent les conduits de carburant 11, les injecteurs et les brides d'accrochage du fond de chambre 7, et en une zone aval 12 dans laquelle se réalise la combustion.

Comme on le voit sur la figure 1, les bords 7a et 7b du fond de chambre 7 sont séparés respectivement des parois radialement intérieure 5 et extérieure 6 par des interstices 13a et 13b afin de permettre des dilatations radiales différentes du fond de chambre 7 et de ces parois 5 et 6.

L'accrochage du bord extérieur 7b du fond de chambre 7 sur la partie amont 6a de la paroi radialement extérieure 6 est réalisé au moyen d'une pluralité de brides d'accrochage souples 14 qui se présentent sous la forme d'arceaux contournant les écrous 15 de retenue des vis 16 traversant des orifices ménagés dans la partie amont 6a et des orifices ménagés à l'extrémité des arceaux 14. Cette disposition est possible car la place disponible dans la partie radialement extérieure de la zone amont 10 est suffisante.

En revanche, la place disponible dans la partie radialement intérieure de la zone amont 10 est insuffisante pour fixer le bord radialement intérieur 7a du fond de chambre 7 sur la partie amont 5a de la paroi radialement intérieure 5 au moyen d'une pluralité de brides d'accrochage sous forme d'arceaux tels que ceux référencés 14 sur la figure 1.

En outre, la fixation du bord radialement intérieur 7a par des brides traditionnelles en forme d'équerres fixées sur la partie amont 5a de la paroi radialement intérieure 5 par des vis 17 et des écrous 18 serait rédhibitoire si le fond de chambre 7 est réalisé dans un matériau ayant un coefficient de dilatation différent de celui de la paroi radialement intérieure 5, ou si le fond de chambre 7 est soumis à des températures supérieures à celles auxquelles les parois 5 et 6 sont soumises.

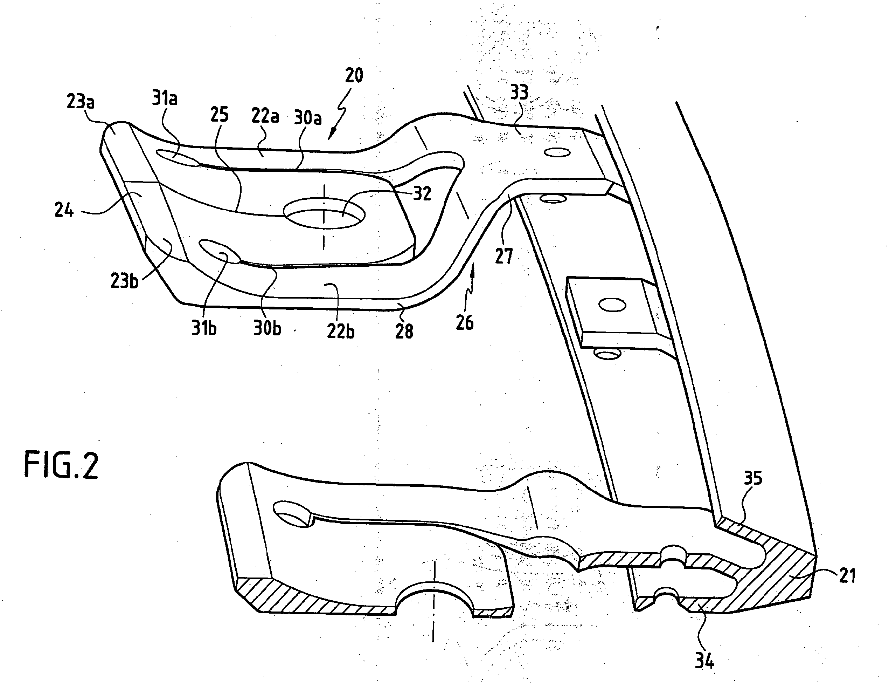

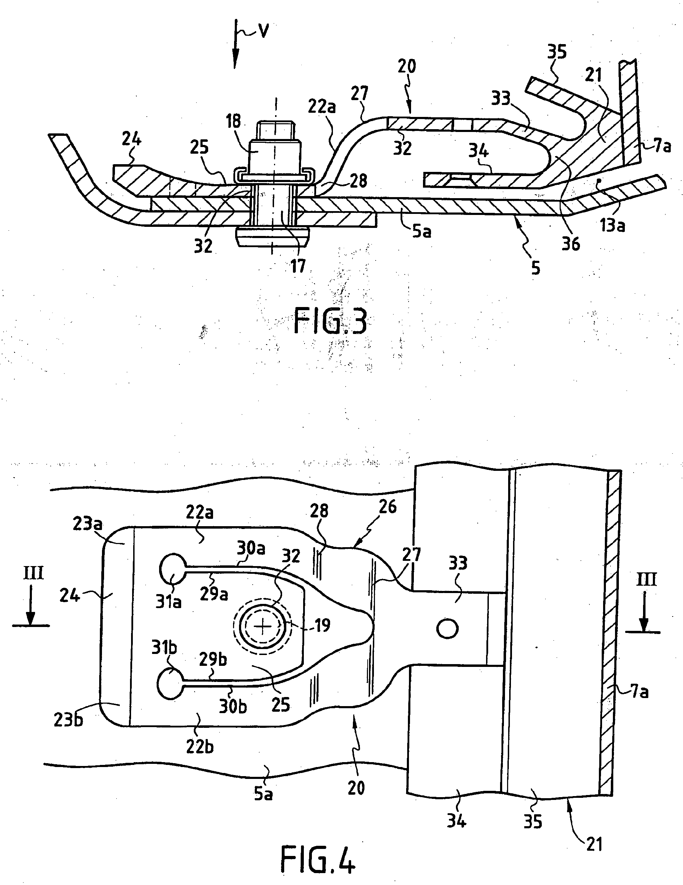

Selon l'invention, ainsi que cela est montré sur les figures 2 à 4, la bride d'accrochage 20 radialement intérieure et proche du bord 7a du fond de chambre 7 est intégrée dans un anneau 21 soudé au fond de chambre 7 et comporte une pluralité de paires de pattes 22a, 22b qui s'étendent vers l'amont dans la partie radialement intérieure de la zone amont 10, au-delà des zones de boulonnage 19 des broches 17 et écrous 18, les deux pattes 22a et 22b d'une paire étant disposées circonférentiellement de part et d'autre d'une zone de boulonnage 19 et étant raccordées à leurs extrémités amont 23a et 23b à l'extrémité amont 24 d'une plaque de fixation 25 disposée entre ces deux pattes 22a et 22b et s'étendant sensiblement dans le plan des portions amont des deux pattes 22a et 22b.

Les pattes 22a et 22b présentent en outre un double cambrage 26 réalisé par deux zones courbes 27 et 28 de courbure opposé, la zone courbe 28 radialement intérieure étant située légèrement en aval de la zone de boulonnage 19, et étant en appui contre la face radialement extérieure de la paroi radialement intérieure 5.

Les pattes 22a et 22b sont séparées des bords 29a 29b de la plaque de fixation 25 par des fentes 30a et 30b qui débouchent dans des trous 31a et 31b situés au voisinage des extrémités 23a et 23b des pattes 22a et 22b et de l'extrémité amont 24 de la plaque de fixation 25.

Les trous 31a et 31b ont un diamètre suffisant pour limiter les contraintes dans ces zones. En outre, les extrémités 23a et 23b des pattes 22a et 22b, et l'extrémité amont 24 de la plaque de fixation 25 présentent une surépaisseur notable afin de limiter les risques de rupture des raccordements des pattes 22a et 22b à la plaque de fixation 25. La plaque de fixation 25 comporte évidemment un alésage traversant 32 pour le passage d'une vis de fixation 17.

Les deux pattes 22a et 22b se raccordent en aval de la zone courbe radialement extérieure 27 pour former une branche 33 sensiblement parallèle à la partie amont 5a de la paroi radialement intérieure 5.

L'anneau 21 présente de part et d'autre des branches 33, d'une part, une lèvre radialement intérieure 34 espacée de la paroi radialement intérieure 5 d'une distance égale à l'épaisseur de l'interstice 13a, et une lèvre radialement extérieure 35.

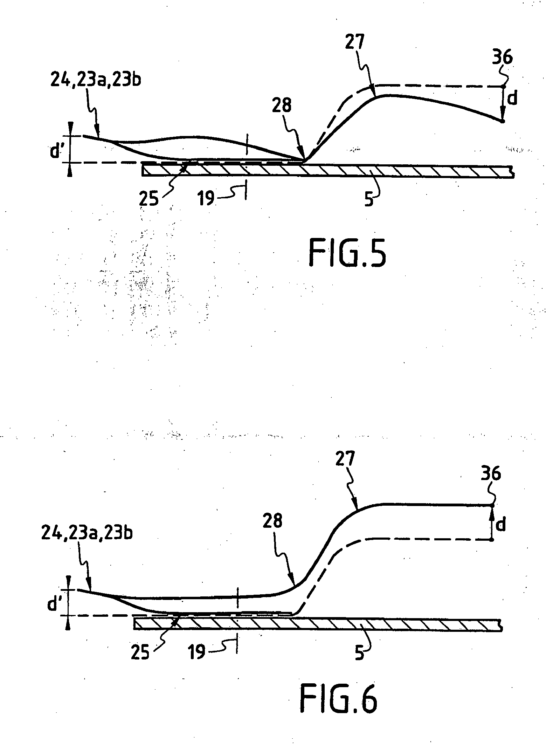

En l'absence d'écart de dilatation radiale du point d'ancrage 36 de la branche 33 sur l'anneau 21 et de la paroi radialement intérieure, les portions des pattes 22a et 22b situées en amont de la zone de courbure 28 sont en appui contre la face extérieure de la paroi radialement intérieure 5. Il en est de même de la plaque de fixation 5. Cette position de repos, ou d'absence de contrainte de la bride d'accrochage 21 est montrée en pointillés sur les figures 5 et 6.

Si la paroi intérieure 5 a un coefficient de dilatation supérieure à celui du fond de chambre 7 comme cela est représenté sur la figure 5, le point d'ancrage 36 se rapproche de la paroi intérieure 5 d'une distance d, en cas d'augmentation des températures, et les parties amont des pattes 22a et 22b pivotent autour des zones courbes 28 en appui sur la paroi intérieure 5, et les extrémités 23a, 23b des pattes 22a et 22b, ainsi l'extrémité 24 de la plaque de fixation s'écartent de la paroi intérieure d'une distance d'. Les partis aval des pattes 22a et 22b se rapprochent évidemment de la paroi radialement intérieure. Cette disposition permet de limiter la déformation des pattes 22a et 22b et le débattement du fond de chambre 7 par rapport à la paroi intérieure 5 en cas de résonance vibatroire.

Si, au contraire, le fond de chambre 7 a un coefficient de dilatation supérieur à celui de la paroi radialement intérieure 5, le point d'ancrage 36 de la branche 33 s'écarte d'une distance d de la paroi intérieure 5, en cas d'augmentation des températures, comme cela est représenté sur la figure 6. L'ensemble des pattes 22a et 22b s'écarte de la paroi intérieure 5 et la plaque de fixation 25 prend une configuration semblable à celle montrée sur la figure 6.

Dans les deux configurations montrées sur les figures 5 et 6, les raccordements des extrémités 23a et 23b des pattes 22a et 22b avec l'extrémité 24 de la plaque de fixation 5, situés en amont des trous 31a et 31b subissent des efforts de flexion radiale, ce qui entraîne de fortes contraintes dans la surépaisseur de ces extrémités.

L'homme du métier comprendra que la bride de raccordement 20 décrite ci-dessus, peut également être utilisée pour fixer le bord 7a radialement extérieur du fond de chambre 7 sur la paroi radialement extérieure 6, en lieu et place des arceaux 14.

## Revendications

1. Chambre de combustion annulaire d'une turbomachine d'axe X comportant une paroi radialement intérieure (5), une paroi radialement extérieure (6) et un fond de chambre (7) disposé entre lesdites parois (5, 6) dans la région amont de ladite chambre, ledit fond de chambre étant fixé sur lesdites parois au moyen d'une pluralité de brides d'accrochage radialement intérieures et d'une pluralité de brides d'accrochage radialement extérieures disposées en amont dudit fond de chambre (7), par boulonnage d'une zone desdites brides sur lesdites parois (5, 6), l'une au moins de ladite pluralité de brides d'accrochage (20) étant integrée dans un anneau (21) solidaire du fond de chambre (7), **caractérisée par le fait que** l'une au moins de ladite pluralité de brides d'accrochage (20) comporte une pluralité de paires de pattes (22a, 22b) qui s'étendent vers l'amont au-delà des zones de boulonnage les deux pattes (22a, 22b) d'une paire étant disposées circonférentiellement de part et d'autre d'une zone de boulonnage (19) et étant raccordées à leurs extrémités amont (23a, 23b) à l'extrémité amont (24) d'une plaque de fixation (25) qui s'étend entre lesdites deux pattes (22a, 22b) et qui présente une zone de boulonnage (19) destinée à être fixée sur la paroi adjacente (5).

2. Chambre de combustion selon la revendication 1, **caractérisée par le fait que** les extrémités amont (23a, 23b) des pattes (22a, 22b) d'une paire de pattes et l'extrémité amont (24) de la plaque de fixation (25) associée comportent une surépaisseur destinée à supporter les contraintes de flexion radiale.

3. Chambre de combustion selon la revendication 2, **caractérisée par le fait que** chaque patte (22a, 22b) est séparée de la plaque de fixation (25) associée par une fente (30a, 30b) débouchant dans un trou (31a, 31b) situé au voisinage de la surépaisseur.

4. Chambre de combustion selon l'une quelconque des revendications 1 à 3, **caractérisée par le fait que** les pattes (22a, 22b) présentent un double cambrage (27, 28) entre l'anneau (21) et la zone de boulonnage (19).

5. Chambre de combustion selon la revendication 4, **caractérisée par le fait que** les pattes (22a, 22b) sont susceptibles d'être en appui contre la paroi adjacente (5) du moins au voisinage du double cambrage (27, 28) afin de limiter le débattement du fond de chambre (7) par rapport à ladite paroi (5) en cas de résonance vibratoire.

6. Chambre de combustion selon l'une quelconque des revendications 1 à 5, **caractérisée par le fait que** l'anneau (21) est rendu solidaire du fond de chambre (7) par soudage.

7. Chambre de combustion selon la revendication 6, **caractérisée par le fait que** l'anneau (21) est soudé sur le bord (7a) radialement intérieur du fond de chambre (7) et est séparé de la paroi radialement intérieure (5) par un jeu (13a) permettant de compenser des écarts de dilatation radiale différente du fond de chambre (7) et de ladite paroi (5).

## Patentansprüche

1. Ringförmige Brennkammer einer Turbomaschine mit einer Achse X, umfassend eine radial innere Wand (5), eine radial äußere Wand (6) und einen Kammerboden (7), der zwischen den Wänden (5, 6) im stromaufwärtigen Bereich der Kammer angeordnet ist, wobei der Kammerboden an den Wänden mit Hilfe einer Vielzahl von radial inneren Befestigungsflanschen und einer Vielzahl von radial äußeren Befestigungsflanschen, die stromaufwärts zu dem Kammerboden (7) angeordnet sind, durch Bolzenverbindung einer Zone der Flansche mit den Wänden (5, 6) befestigt ist, wobei mindestens eine der Vielzahl von Befestigungsflanschen (20) in einen Ring (21) integriert ist, der mit dem Kammerboden (7) verbunden ist,
**dadurch gekennzeichnet, dass** mindestens eine der Vielzahl von Befestigungsflanschen (20) eine Vielzahl von Laschenpaaren (22a, 22b) umfasst, die sich stromaufwärts über die Bolzenverbindungszonen (19) hinaus erstrecken, wobei die beiden Laschen (22a, 22b) eines Paars in Umfangsrichtung beiderseits einer Bolzenverbindungszone (19) angeordnet und an ihren stromaufwärtigen Enden (23a, 23b) mit dem stromaufwärtigen Ende (24) einer Befestigungsplatte (25) verbunden sind, die sich zwischen den beiden Laschen (22a, 22b) erstreckt und die eine Bolzenverbindungszone (19) aufweist, die dazu bestimmt ist, an der angrenzenden Wand (5) befestigt zu werden.

2. Brennkammer nach Anspruch 1, **dadurch gekennzeichnet, dass** die stromaufwärtigen Enden (23a, 23b) der Laschen (22a, 22b) eines Laschenpaars und das stromaufwärtige Ende (24) der zugehörigen Befestigungsplatte (25) eine Überdicke umfassen, die dazu bestimmt ist, die radialen Biegespannungen aufzunehmen.

3. Brennkammer nach Anspruch 2, **dadurch gekennzeichnet, dass** jede Lasche (22a, 22b) von der zugehörigen Befestigungsplatte (25) durch einen Schlitz (30a, 30b) getrennt ist, der in ein Loch (31 a, 31 b) mündet, das sich in der Nähe der Überdicke befindet.

4. Brennkammer nach einem der Ansprüche 1 bis 3, **dadurch gekennzeichnet, dass** die Laschen (22a, 22b) eine Doppelbiegung (27, 28) zwischen dem Ring (21) und der Bolzenverbindungszone (19) aufweisen.

5. Brennkammer nach Anspruch 4, **dadurch gekennzeichnet, dass** die Laschen (22a, 22b) geeignet sind, an der angrenzenden Wand (5) mindestens ein der Nähe der Doppelbiegung (27, 28) anzuliegen, um den Ausschlag des Kammerbodens (7) in Bezug zur Wand (5) im Falle einer Schwingungsresonanz zu begrenzen.

6. Brennkammer nach einem der Ansprüche 1 bis 5, **dadurch gekennzeichnet, dass** der Ring (21) mit dem Kammerboden (7) durch Schweißen verbunden wird.

7. Brennkammer nach Anspruch 6, **dadurch gekennzeichnet, dass** der Ring (21) an den radial inneren Rand (7a) des Kammerbodens (7) geschweißt und von der radial inneren Wand (5) durch ein Spiel (13a) getrennt ist, das es ermöglicht, die Abweichungen einer unterschiedlichen radialen Dehnung des Kammerbodens (7) und der Wand (5) auszugleichen.

## Claims

1. An annular combustion chamber for a turbomachine of axis X, the chamber comprising a radially-inner side wall (5), a radially-outer side wall (6), and a chamber end wall (7) disposed between said inner and outer side walls (5, 6) in the upstream region of said chamber, said chamber end wall being fixed to said inner and outer side walls by means of a plurality of radially-inner attachment fittings and a plurality of radially-outer attachment fittings disposed upstream from said chamber end wall (7) by bolting a zone of said fitting on said side walls (5, 6), at least one of said plurality of attachment fittings (20) being integrated in a ring (21) secured with the chamber end wall (7),
the combustion chamber being **characterized by** the fact that at least one of said plurality of attachment fittings (20) comprises a plurality of pairs of tabs (22a, 22b) which extend upstream beyond the bolting zones (19), the two tabs (22a, 22b) in a pair being disposed circumferentially on either side of a bolting zone (19) and being interconnected at their upstream end (23a, 23b) to the upstream end (24) of a fixing plate (25) which extends between said two tabs (22a, 22b) and which presents a bolting zone (19) for being fixed to the adjacent side wall (5).

2. A combustion chamber according to claim 1, **characterized by** the fact that the upstream ends (23a, 23b) of the tabs (22a, 22b) in a pair of tabs, and the upstream end (24) of the associated fixing plate (25) include a portion of extra thickness for withstanding radial bending stresses.

3. A combustion chamber according to claim 2, **characterized by** the fact that each tab (22a, 22b) is separated from the associated fixing plate (25) by a slot (30a, 30b) opening out into a hole (31a, 31b) situated in the vicinity of the portion of extra thickness.

4. A combustion chamber according to any one of claims 1 to 3, **characterized by** the fact that the tabs (22a, 22b) have a double bend (27, 28) between the ring (21) and the bolting zone (19).

5. A combustion chamber according to claim 4, **characterized by** the fact that the tabs (22a, 22b) are suitable for bearing against the adjacent side wall (5) at least in the vicinity of the double bend (27, 28) in order to limit the extent to which the chamber end wall (7) can move relative to said side wall (5) in the event of vibratory resonance.

6. A combustion chamber according to any one of claims 1 to 5, **characterized by** the fact that the ring (21) is secured to the chamber end wall (7) by welding.

7. A combustion chamber according to claim 6, **characterized by** the fact that the ring (21) is welded to the radially-inner edge (7a) of the chamber end wall (7) and is separate from the radially-inner side wall (5) by a gap (13a) serving to compensate for radial expansion differences between the chamber end wall (7) and said side wall (5).
